# DEMANDE DE BREVET EUROPEEN

(11) **EP 2 110 538 A1**
(43) Date de publication de la demande: **21.10.2009**
(21) Numéro de dépôt: 09155620.9
(22) Date de dépôt: 19.03.2009
(51) Int. Cl.: F02M 35/10

(54) **Raccord de sortie de compresseur d'air d'admission**

(30) Priorité: 17.04.2008 FR 0852623
(71) Demandeur: Peugeot Citroën Automobiles SA, 78140 Vélizy-Villacoublay (FR)
(72) Inventeur: Monin, Martine, 92000 Nanterre (FR); Fromonteil, Didier, 93000 Bobigny (FR); Feasson, Julien, 92250 La Garenne Colombes (FR); Toba Izquierdo, Elena, 78140 Velizy-Villacoublay (FR)
(74) Mandataire: Ménès, Catherine

(57) **Abrégé**

L'invention concerne un raccord (1) de sortie d'un organe de suralimentation d'air d'admission de moteur à combustion interne, comprenant une paroi en matériau thermoplastique délimitant un conduit traversé par l'air d'admission, une extrémité du conduit présentant un embout (12) adapté pour la fixation d'une sortie d'un organe de suralimentation, une surface de l'embout (12) étant destinée à être en contact avec la sortie de l'organe de suralimentation étant revêtue d'un matériau métallique (63).

## Description

L'invention concerne l'admission d'air dans un moteur à combustion interne, et en particulier les circuits d'admission d'air munis d'un mécanisme de suralimentation.

Pour améliorer le rendement énergétique et la puissance spécifique d'un moteur à combustion interne, il est fréquent de munir un tel moteur d'un mécanisme de suralimentation de son air d'admission. De tels mécanismes de suralimentation augmentent la pression de l'air d'admission introduit dans la chambre de combustion.

Les mécanismes de suralimentation les plus diffusés sont des turbocompresseurs. Un turbocompresseur comprend une turbine de détente entraînée en rotation par les gaz d'échappement. La turbine de détente entraîne une turbine de compression par l'intermédiaire d'un arbre. La turbine de compression aspire des gaz d'admission et les comprime. La turbine de compression est montée à rotation dans un carter métallique. Un raccord est fixé à la sortie du carter métallique et conduit l'air compressé plus en aval vers l'admission du moteur. Pour réduire le poids et le coût d'un tel raccord, celui-ci est fréquemment réalisé en matière thermoplastique. Un tel raccord nécessite fréquemment des thermoplastiques présentant une haute résistance à la température, du fait de la présence d'organes de dépollution à proximité (par exemple un filtre à particules ou un catalyseur d'oxydation), d'un espace dans le compartiment moteur réduit, et de l'échauffement du carter de la turbine de compression. De tels matériaux impliquent un surcoût non négligeable.

Par ailleurs, la recirculation des gaz d'échappement permet de diminuer le niveau des oxydes d'azote émis dans les gaz d'échappement. La recirculation de gaz d'échappement consiste à introduire de l'air frais et des gaz d'échappement dans la chambre de combustion du moteur. Pour des moteurs diesels, il est courant de voir des taux de recirculation de l'ordre de 50 %, ce qui signifie que la moitié des gaz aspirés par un cylindre d'un moteur à combustion interne sont des gaz d'échappement recirculés. Des normes d'émission de gaz polluants de plus en plus strictes ont conduit à la généralisation de circuits de recirculation de gaz d'échappement EGR pour les moteurs diesel. Cependant, l'utilisation de l'EGR pour les moteurs à allumage commandé est également en plein développement. Afin de réduire encore les niveaux d'émission de gaz polluants, il est envisagé de prélever des gaz d'échappement basse pression, c'est-à-dire juste en amont du silencieux d'échappement et en aval des organes de dépollution. Le gaz d'échappement basse pression est mélangé à de l'air frais en amont de la turbine de compression d'air d'admission.

Un tel mode de fonctionnement du moteur à combustion interne présente des inconvénients. En effet, les inventeurs ont constaté une usure prématurée du raccord de sortie de turbocompresseur.

L'invention vise à résoudre un ou plusieurs de ses inconvénients. L'invention concerne ainsi un raccord de sortie d'un organe de suralimentation d'air d'admission de moteur à combustion interne, comprenant une paroi en matériau thermoplastique délimitant un conduit traversé par l'air d'admission, une extrémité du conduit présentant un embout adapté pour la fixation d'une sortie d'un organe de suralimentation. Une surface de l'embout destinée à être en contact avec la sortie de l'organe de suralimentation est revêtue d'un matériau métallique.

Selon une variante, la face extérieure de ladite paroi formant le conduit est revêtue d'un matériau métallique.

Selon encore une variante, la face intérieure de ladite paroi formant le conduit est revêtue d'un matériau métallique.

Selon une autre variante, ledit matériau thermoplastique est du polyamide.

Selon encore une autre variante, ledit matériau thermoplastique est renforcé par des fibres, en particulier des fibres de verre.

Selon une variante, le matériau métallique est chimiquement compatible avec le matériau thermoplastique.

Selon encore une variante, le matériau métallique présente une taille de grain comprise entre 2 et 5000 nm, et une épaisseur comprise entre 25 µm et 5 mm.

L'invention porte également sur un turbocompresseur pour moteurs à combustion interne, comprenant :
- un raccord de sortie tel que décrit ci-dessus;
- un corps métallique logeant une turbine et présentant une entrée d'air d'admission et une sortie d'air d'admission compressé, la sortie étant fixée contre ladite surface du raccord revêtue de matériau métallique.

Selon une variante, le turbocompresseur comprend un boîtier de dosage de mélange de l'air d'admission avec du gaz d'échappement recyclé, ledit boîtier présentant une entrée d'air d'admission compressée, le raccord de sortie présentant une extrémité connectée à cette entrée d'air d'admission.

L'invention porte en outre sur un moteur à combustion interne comprenant :
- un turbocompresseur tel que décrit ci-dessus ;
- un filtre à particules disposé à proximité dudit raccord.

L'invention porte par ailleurs sur un procédé de fabrication d'un raccord de sortie d'un organe de suralimentation d'air d'admission, comprenant une étape de revêtir d'un matériau métallique un embout ménagé à une extrémité d'un conduit destiné à être traversé par l'air d'admission, l'embout étant adapté pour la fixation d'une sortie d'un organe de suralimentation.

D'autres caractéristiques et avantages de l'invention ressortiront clairement de la description qui en est faite ci-après, à titre indicatif et nullement limitatif, en référence aux dessins annexés, dans lesquels :
- les figures 1 et 2 sont des vues en perspective d'un raccord fixé à la sortie d'un turbocompresseur;
- la figure 3 est vue en coupe d'un exemple de dégradation d'un raccord de sortie de turbocompresseur selon l'état de la technique ;
- la figure 4 est une vue en coupe d'une extrémité du raccord illustré aux figures 1 et 2 ;
- la figure 5 est une section transversale du raccord de la figure 4 dans sa partie médiane.

Un thermoplastique désigne un polymère susceptible d'être ramolli par chauffage et durci par refroidissement de manière répétée. Les polymères thermoplastiques sont transformés sans réaction chimique, contrairement aux polymères thermodurcissables. La cadence de transformation de ces polymères thermoplastiques est principalement liée à leur vitesse de refroidissement et est donc beaucoup plus rapide que celle des polymères thermodurcissables.

L'invention propose un raccord de sortie d'organe de suralimentation d'air admission, muni d'un embout ménagé à une extrémité d'un conduit, cet embout présentant une surface destinée à être en contact avec la sortie de l'organe de suralimentation d'air d'admission, cette surface de contact étant revêtue d'un matériau métallique.

Ainsi, on peut réaliser un raccord de sortie d'air suralimenté léger, résistant à la température (fluage à haute température du thermoplastique ou endommagement par oxydation à haute température) au niveau de la jonction avec l'organe de suralimentation et présentant un coût réduit. Ainsi, un tel raccord pourra notamment résister à la chaleur provenant d'un filtre à particules ou d'un catalyseur d'oxydation et conduite par le corps métallique de l'organe de compression.

Un raccord en matériaux thermoplastiques pourra ainsi continuer à être utilisé même lorsque la température de contact en continu est supérieure à 190°ou lorsque la température de contact en pointe est supérieure à 210°.

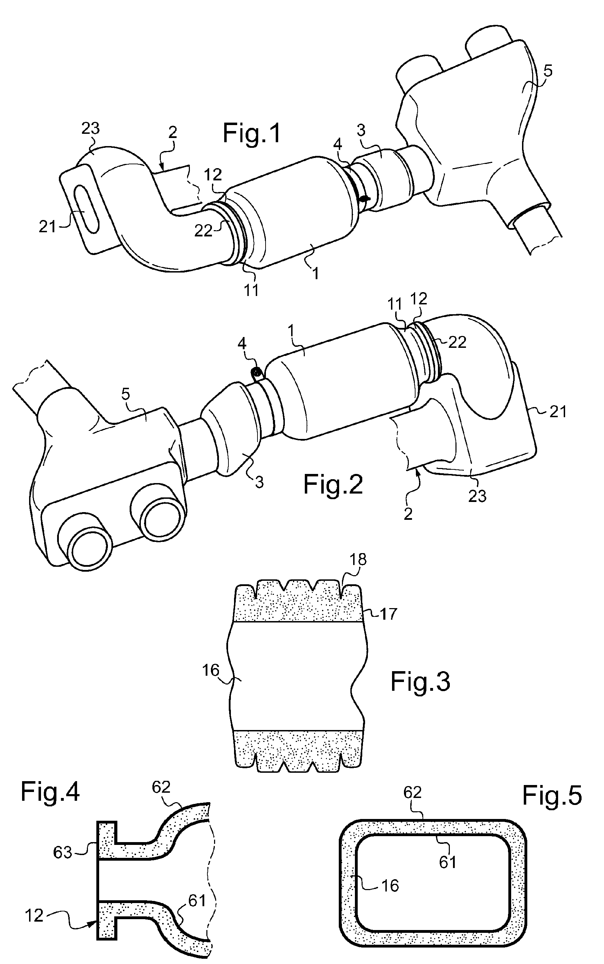

Les figures 1 et 2 sont des vues en perspective d'une partie d'un circuit d'admission incluant une turbine de compression et un raccord de sortie selon l'invention. Une turbine de compression 2 est munie d'un corps 23 métallique. Le corps 23 comprend de façon connue en soi une entrée d'air à compresser 21 et une sortie d'air compressé 22. Un raccord de sortie 1 est fixé sur la sortie 22 de la turbine 2. Une paroi du raccord 1 délimite un conduit destiné à guider l'air compressé provenant de la turbine 2 plus en aval vers l'admission du moteur. Un embout 11 est ménagé au niveau d'une extrémité du raccord 1 fixée à la sortie 22. Une collerette 12 est réalisée au niveau de l'embout 11. La collerette 12 est plaquée contre une collerette réalisée au niveau de la sortie 22. L'embout 11 est fixé par tous moyens appropriés à la sortie 22, par exemple par vissage ou par clipsage.

Comme illustré à la figure 4, la face de la collerette 12 en contact avec la sortie 22 est revêtue d'une couche de matériau métallique 63. Le raccord 1 présente ainsi une résistance thermique accrue face à la chaleur conduite par le corps 23. Ainsi, la chaleur éventuellement dégagée par un filtre à particules ou un catalyseur d'oxydation et conduite par le corps 23, ou la chaleur dégagée par la compression de l'air d'admission ne conduisent pas à la détérioration du raccord 1. Un tel dégagement de chaleur peut éventuellement être gênant dans certaines conditions de fonctionnement, par exemple à l'arrêt du moteur après roulage et donc en l'absence de flux d'air de refroidissement, ou lors de phases de tractage de fortes charges.

Avantageusement, la face extérieure de la paroi délimitant le conduit du raccord 1 est revêtue d'une couche de matériau métallique 62. Ainsi, la tenue thermique du raccord 1 face aux températures environnantes dans le compartiment moteur est améliorée.

Indépendamment de la présence du revêtement métallique 63 sur la surface de contact de l'embout 11, le raccord 1 présente avantageusement une couche métallique 61 recouvrant la face intérieure de la paroi délimitant le conduit. Ainsi, le raccord 1 présentera une résistance accrue face à d'éventuels résidus acides provenant d'un recyclage de gaz d'échappement à basse pression.

La figure 5 représente une section transversale du raccord 1 dans sa partie médiane. La couche métallique 62 protège thermiquement la face extérieure de cette partie médiane, tandis que la couche métallique 61 protège thermiquement la face intérieure de cette partie médiane.

Dans l'exemple illustré, le circuit d'air d'admission comprend un boîtier de dosage d'air 5 placé en aval du raccord 1. Le boîtier de dosage d'air est destiné à commander les proportions respectives à l'admission de l'air provenant du turbocompresseur 2 et du gaz d'échappement recyclé haute pression. L'extrémité aval du raccord 1 est connectée au boîtier 5 par l'intermédiaire d'un manchon en caoutchouc 3. Un tel manchon 3 peut aisément être déformé pour rattraper les dispersions de montage et de fabrication au niveau du moteur. Le manchon 3 est muni d'une extrémité emmanchée sur un embout du raccord 1. Cette extrémité est fixée sur cet embout du raccord 1 par l'intermédiaire d'un collier de serrage 4.

Bien que dans l'exemple illustré le raccord 1 soit connecté au boîtier de dosage d'air 5 par l'intermédiaire du manchon 3, on peut envisager que le raccord 11 connecte directement la sortie 22 au boîtier 5. Bien que l'on ait illustré un assemblage par mise en contact de deux collerettes entre le turbocompresseur 2 et le raccord 1, on peut également envisager un assemblage par emmanchement. L'embout 11 pourra par exemple s'emmancher sur une portée ménagée au niveau de la sortie 22 du turbocompresseur.

La figure 3 représente une paroi 16 en matériau thermoplastique exempte de revêtement métallique sur ses faces et soumise pendant une longue durée à des températures et des rayonnements critiques en présence d'air. On constate sur une telle paroi 16 l'apparition d'une couche de surface dégradée 17, présentant du retrait, des contraintes internes et l'apparition de fissures 18. La pénétration de l'oxygène dans les fissures 18 accélère la dégradation de la paroi 16. La présence de ces fissures 18 diminue également la résistance mécanique de la paroi 16. La dégradation se manifeste également par une perte d'épaisseur des pièces, diminuant d'autant la tenue mécanique de la paroi 16. La tenue à la fatigue en pression pulsée ou en vibratoire diminue alors fortement.

L'homme du métier pourra déterminer un matériau métallique chimiquement compatible avec le matériau thermoplastique utilisé pour la paroi. Les couches métalliques seront formées monobloc sur le matériau thermodurcissable. Les couches 61 à 63 pourront être formées par un dépôt d'un alliage métallique nanocristallin, contenant un alliage de nickel et de fer. Un tel alliage métallique est notamment commercialisé sous le nom commercial Metafuse par la société Dupont. Cet alliage est particulièrement avantageux pour revêtir des matières thermoplastiques renforcées par des fibres de verre dont l'adhésion en surface est généralement réduite. Le renfort par des fibres de verre permet avantageusement d'accroître la résistance mécanique des thermoplastiques dans un environnement soumis à des contraintes mécaniques et thermiques croissantes.

Le document W02006/063469 décrit des procédés de formation de revêtements à grain fin par dépôt métallique. Le dépôt est effectué par électrodéposition en courant alternatif ou continu. Ce document fait référence à des techniques déjà connues de dépôt de métaux à grain fin par électrodéposition, par la sélection de formulations et de conditions de bains de plaquage adéquates. Ce document fait également référence à des procédés de dépôt chimiques en phase vapeur ou par pistolage à froid. Ce document préconise de réaliser un revêtement métallique ayant une taille de grain comprise entre 2 et 5000 nm, une épaisseur comprise entre 25µm et 5 mm, et une dureté comprise entre 200 et 3000 VHN. Le revêtement décrit présente une résilience comprise entre 0,25 et 25 MPa et une limite à l'allongement élastique comprise entre 0,25% et 2%. Le document indique des valeurs de rugosité à respecter pour la surface à métalliser.

L'invention permet d'utiliser des matériaux thermoplastiques présentant une température de fusion inférieure ou égale à 300°C, sans pour autant nuire à la longévité du raccord. Le matériau plastique utilisé pour le raccord pourra être du polyamide. L'épaisseur de la paroi du raccord comprendra avantageusement au moins 50 % de matériaux thermoplastiques. Le raccord est avantageusement formé d'un matériau thermoplastique renforcé par des fibres, ce qui accroît sa résistance mécanique et sa durée de vie. Les fibres de renforcement pourront par exemple être des fibres de verre. Le matériau thermoplastique pourra notamment être du PA6 GF35, du PA66 GF35, du PA66 GF 30, du PA46GF30 ou du PPAGF30.

## Revendications

1. Raccord (1) de sortie d'un organe de suralimentation d'air d'admission de moteur à combustion interne, comprenant une paroi en matériau thermoplastique délimitant un conduit traversé par l'air d'admission, une extrémité du conduit présentant un embout (11) adapté pour la fixation d'une sortie d'un organe de suralimentation, **caractérisé en ce qu'**une surface de l'embout (11) destinée à être en contact avec la sortie de l'organe de suralimentation est revêtue d'un matériau métallique (63).

2. Raccord de sortie (1) selon la revendication 1, dans lequel la face extérieure de ladite paroi formant le conduit est revêtue d'un matériau métallique (62).

3. Raccord de sortie selon la revendication 1 ou 2, dans lequel la face intérieure de ladite paroi formant le conduit est revêtue d'un matériau métallique (61).

4. Raccord de sortie selon l'une quelconque des revendications précédentes, dans lequel ledit matériau thermoplastique est du polyamide.

5. Raccord de sortie selon l'une quelconque des revendications précédentes, dans lequel ledit matériau thermoplastique est renforcé par des fibres.

6. Raccord de sortie selon la revendication 5, dans lequel ledit matériau thermoplastique est renforcé par des fibres de verre.

7. Raccord de sortie selon l'une quelconque des revendications précédentes, dans lequel le matériau métallique est chimiquement compatible avec le matériau thermoplastique.

8. Raccord de sortie selon l'une quelconque des revendications précédentes, dans lequel le matériau métallique (61,62,63) présente une taille de grain comprise entre 2 et 5000 nm, et une épaisseur comprise entre 25 µm et 5 mm.

9. Turbocompresseur (2) pour moteurs à combustion interne, comprenant un raccord de sortie (1) selon l'une quelconque des revendications précédentes ; et un corps métallique (23) logeant une turbine et présentant une entrée d'air d'admission (21) et une sortie (22) d'air d'admission compressé, la sortie étant fixée contre ladite surface du raccord revêtue de matériau métallique.

10. Turbocompresseur selon la revendication 9, comprenant un boîtier de dosage (5) de mélange de l'air d'admission avec du gaz d'échappement recyclé, ledit boîtier présentant une entrée d'air d'admission compressée, le raccord de sortie (1) présentant une extrémité connectée à cette entrée d'air d'admission.

11. Moteur à combustion interne comprenant un turbocompresseur (2) selon la revendication 9 ou 10 ; et un filtre à particules disposé à proximité dudit raccord (1).

12. Procédé de fabrication d'un raccord de sortie d'un organe de suralimentation d'air d'admission, comprenant une étape de revêtir d'un matériau métallique un embout (11) ménagé à une extrémité d'un conduit destiné à être traversé par l'air d'admission, l'embout étant adapté pour la fixation d'une sortie (22) d'un organe de suralimentation.
